# EUROPÄISCHE PATENTSCHRIFT

(11) **EP 0 838 241 B1**
(45) Veröffentlichungstag und Bekanntmachung des Hinweises auf die Patenterteilung: **14.01.2004**
(21) Anmeldenummer: 97112817.8
(22) Anmeldetag: 25.07.1997
(51) Int. Cl.: A62C 37/14, A62C 2/24

(54) **Thermisch auslösende Trennvorrichtung, insbesondere für Feuerschutzanlagen**
Thermally activated separation device, particularly for fire protection installations
Dispositif de séparation actionné thermiquement, notamment pour installation de protection anti-incendie

(30) Priorität: 30.08.1996 DE 19635177
(43) Veröffentlichungstag der Anmeldung: 29.04.1998
(73) Patentinhaber: Job Lizenz GmbH & Co. KG, 22926 Ahrensburg (DE)
(72) Erfinder: Job, Eduard J., Dipl.-Ing., 22926 Ahrensburg (DE); Schnoor, Christian, 23562 Lübeck (DE); Bergmann, Christian, Dipl.-Ing., 19071 Brüsewitz (DE)
(74) Vertreter: von Raffay, Vincenz, Dipl.-Ing.

(56) Entgegenhaltungen:
- EP-A- 0 339 788
- AU-B- 510 552
- DE-A- 1 559 693
- DE-A- 3 736 242
- US-A- 1 816 017

## Beschreibung

Die Erfindung betrifft eine thermisch auslösende Trennvorrichtung, insbesondere für Feuerschutzanlagen, mit zwei einander gegenüberliegend angeordneten und miteinander verbundenen, auf Zug beanspruchten Fügeteilen, zwischen denen das thermische Auslöseelement gehalten ist. Derartige Vorrichtungen sind zwischen zwei Seilen oder ähnlichen Zugelementen angeordnet, so daß ihre bügelförmigen Fügeteile unter Zugspannung stehen. Sie werden z.B. in Lösch-, Absperr- und Öffnungsvorrichtungen eingesetzt, die bei überschrittenen Temperaturen eine Sicherheitsfunktion auslösen, wie z.B. Ventile öffnen oder schließen, Rauchabzugsklappen öffnen und Absperrklappen in Lüftungskanälen schließen.

Die Erfindung ist auf eine solche Trennvorrichtung gerichtet, wie sie beispielsweise aus der DE-OS 1 559 693 bekannt ist, und bei der das Auslöseelement durch eine thermisch auslösende Glasampulle gebildet wird. Diese Glasampulle wird bei Überschreiten einer bestimmten Temperatur zerstört und gibt die Trennvorrichtung frei, d.h. die bügelförmigen Fügeteile können sich voneinander trennen, um die entsprechenden Sicherheitsmaßnahmen auszulösen. Die Zugkräfte, die auf die Fügeteile wirken, und damit mehr oder weniger auf die Glasampulle übertragen werden, können relativ groß sein. Bei der Trennvorrichtung nach der DE-OS 1 559 693 wirkt das durch die Fügeteile gebildete Kräfteparallelogramm so, daß auf die Glasampulle lediglich eine Druckkraft übertragen wird. Diese Druckkraft ist aufgrund der ungünstigen Anordnung im Parallelogramm sogar größer als die Zugkraft. Dieses ist in vielen Fällen nicht vertretbar. Die Glasampulle muß entsprechend kräftig ausgebildet sein, was wiederum die Ansprechsensibilität beeinträchtigt. Moderne Glasampullen sind schlank und sprechen sehr viel schneller an. Aus diesem Grund ist es vorteilhaft, die Druckkräfte zu reduzieren und die schlanke, schnell ansprechende Glasampulle einzusetzen. Glasampullen haben sich als thermische Auslöseelemente bei Sprinklern aufgrund der hohen Zuverlässigkeit bestens bewährt.

Der Erfindung liegt daher die Aufgabe zugrunde, eine Trennvorrichtung der eingangs genannten Art zu schaffen, bei der das thermische Auslöseglied nur mit einer geringen Druckkraft in der Verriegelungsstellung beaufschlagt wird, die um ca. 70% geringer ist als die auf die Fügeteile wirkende Zugkraft. Weiterhin soll die Trennvorrichtung einfach aufgebaut sein und zuverlässig bei Auftreten des Sicherheitsfalles arbeiten.

Diese Aufgabe wird durch die Trennvorrichtung des Anspruches 1 gelöst.

Bei der Trennvorrichtung nach der Erfindung bilden die Bügel einen rautenförmigen Rahmen, bei dem das thermische Auslöseelement senkrecht zur Zugrichtung angeordnet ist. Die Zugkräfte werden symmetrisch auf die Bügel aufgeteilt, d.h. der obere bzw. untere Teil und jede Verriegelung werden nur mit ca. 50% der Gesamtzugkräfte belastet. Die Bügel bilden ein Kräfteparallelogramm, in dem senkrecht zur Zugrichtung das thermische Auslöseelement mit einer Druckkraft belastet wird. Die Druckkraft ist aufgrund der Anordnung quer zur Zugrichtung um ca. 70% geringer als die Zugkraft.

Die Bügel sind mit geringer Vorspannung gefertigt. Die Vorspannung (Anspruch 3) ist vorteilhaft, um die Bügel in Formschluß, abgestützt durch das thermische Auslöseelement, zu halten. Bedingt durch die geringe Vorspannung, löst das thermische Trennglied auch ohne Zugbelastung aus.

Das eigentliche Trennen geschieht durch das Zusammenklappen des Kräfteparallelogramms, wenn das thermische Auslöseelement durch Wärmeeinwirkung zerstört wird. Durch die Ausgestaltung nach Anspruch 2 wird beim Zusammenklappen des Parallelogramms unter Zuglast ein Haken jedes Schenkels, der das thermische Auslöseelement hält, zwangsweise aus einer Öffnung des anderen nicht das thermische Auslöseelement haltenden Schenkels herausgehebelt (siehe auch Anspruch 6). Die Aushebelkräfte verhalten sich proportional zu den Zugkräften, d.h. bei steigenden Zugkräften steigen auch die Aushebelkräfte. Dieses ist durch die Tatsache bedingt, daß die Schenkel entsprechend über die Mittelachse des thermischen Auslöseelementes hinausreichen.

Das eigentliche Kräfteparallelogramm verläuft zwischen den Angriffspunkten der Zugkräfte und den Auflagepunkten des thermischen Auslöseelementes. Die Zugkräfte werden geringfügig um das Kräfteparallelogramm herumgeleitet, wodurch ein geringer Federeffekt erzielt wird.

In vorteilhafter Weise ist die Trennvorrichtung so ausgebildet, wie in den weiteren Ansprüchen 3 bis 10 angegeben. Durch die abgewinkelte Form der Schenkel jedes Bügels entsteht das gewünschte Parallelogramm, das in seinem Zentrum das thermische Auslöseelement aufnimmt. Gleichzeitig halten sich die Schenkel in der Verriegelungsstellung gegenseitig (Anspruch 5). Eine besonders vorteilhafte Ausführungsform ist Gegenstand der Ansprüche 6 und 7. Einerseits ist an jedem Bügel ein Haken vorhanden, durch den die formschlüssige Verbindung in der Verriegelungsstellung gebildet wird. Dieser Haken ist so in die Öffnung des anderen Schenkels eingehakt, daß bei Zerstörung des thermischen Auslöseelementes diese Verbindung sicher gelöst wird, gleichzeitig aber die Zugkräfte in der Verriegelungsstellung übertragen werden (Anspruch 5). Wenn die Vorrichtung so ausgebildet ist, wie in Anspruch 6 angegeben, dann sorgt die Lasche nicht nur für die sichere Halterung und Positionierung der Schenkel mit dem thermischen Auslöseelement in der Verriegelungsstellung, sondern die Keilform stellt in Verbindung mit der Form des Fensters auch sicher, daß die beiden Bügel sich nicht um die Zugachse gegeneinander verdrehen. Außerdem verhindert die Lasche in dem Fenster ein Zusammenschieben bei Druckkräften auf die Trennvorrichtung.

Die Ausführungsform nach Anspruch 8 hat den Vorteil, daß die Federkraft, die die Vorspannung ausübt, durch die Ösen bereitgestellt wird, die die eigentlichen Federelemente bilden. Bei der Ausführungsform nach Anspruch 9 sind flache Ösen vorhanden, die sich besonders zum Aufstecken auf Zapfen oder Bolzen eignen, wohingegen die Ausbildung nach Anspruch 8 zur Verbindung mit Zugseilen geeignet ist.

In vorteilhafter Weise schafft die Erfindung eine Trennvorrichtung, die aus vorzugsweise zwei identischen Bügeln aus gehärtetem Federstahl besteht, die das thermische Auslöseelement in der Verriegelungsstellung so halten, daß das rautenförmige Kräfteparallelogramm eine im Verhältnis zu der angelegten Zugkraft relativ geringe Druckkraft auf das thermische Auslöseelement überträgt. Im Sicherheitsfall ist das thermische Auslöseelement nicht isoliert oder abgeschirmt. Die ansteigende Temperatur wird schnell auf das thermische Auslöseelement übertragen und der Sicherheitsfall wird ausgelöst. Die durch die Bügel gebildete Raute klappt zusammen, wodurch die formschlüssige Verbindung gelöst wird und das angestrebte Trennen erfolgt.

Im folgenden wird die Erfindung unter Hinweis auf die Zeichnung anhand zweier Ausführungsbeispiele näher erläutert.

Es zeigt:
- Fig. 1: eine Seitenansicht einer Ausführungsform der Erfindung mit Kräfteparallelogramm;
- Fig. 2: die Draufsicht auf eine Ausführungsform einer Trennvorrichtung nach der Erfindung;
- Fig. 3: eine Seitenansicht der Trennvorrichtung nach Fig. 2 in Verriegelungsstellung;
- Fig. 4: eine Seitenansicht der Trennvorrichtung nach Fig. 3 unmittelbar nach Zerstören der Glasampulle;
- Fig. 5: eine den Fig. 3 und 4 entsprechende Seitenansicht, jedoch nach dem Trennen der beiden Fügeteile;
- Fig. 6: eine Draufsicht auf eine andere Ausführungsform einer Trennvorrichtung nach der Erfindung;
- Fig. 7: eine Seitenansicht der Ausführungsform nach Fig. 6 in Verriegelungsstellung;
- Fig. 8: eine der Fig. 7 entsprechende Seitenansicht, unmittelbar nach dem Zerstören der Glasampulle; und
- Fig. 9: eine den Fig. 7 und 8 entsprechende Seitenansicht nach dem Trennen der Fügeteile dieser Ausführungsform.

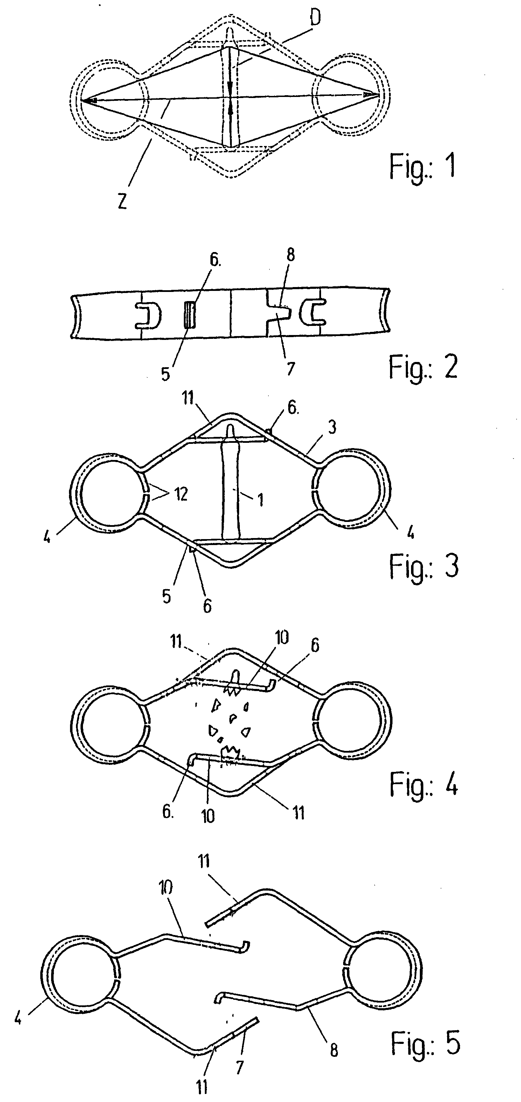

In Fig. 1 ist D die Druckkraft auf das thermische Auslöseelement und Z die Zugkraft.

In den Zeichnungen sind gleiche Teile mit gleichen Bezugszeichen bezeichnet. Bei beiden Ausführungsformen bestehen die bügelförmigen Fügeteile 2,3 aus gehärtetem Federstahl.

Die Bügel 2,3 der Ausführungsform nach den Fig. 2 bis 5 sind aus Flachbandstahl hergestellt. Jeder Bügel 2,3 weist eine Öse 4 auf, die gleichzeitig eine ringförmige Feder bildet. Von dieser Öse 4 gehen zwei unterschiedliche Schenkel 10 und 11 aus. Jeder Schenkel nimmt ca. 50% der Zugkräfte auf. In Fig. 3 nehmen die beiden Bügel 2,3 ihre normale Verriegelungsstellung ein, zusammen mit einer Glasampulle 1. Die beiden Bügel 2,3 werden durch Formschluß und geringe Vorspannung gestützt durch die Glasampulle 1 in Verriegelungsstellung gehalten. Die Zugkraft, die auf die beiden Klammern ausgeübt wird, verläuft durch die Mittelpunkte der beiden Ösen 4 in der Zeichenebene (Fig. 3 bis 5).

Die Glasampulle 1 wird durch die beiden Schenkel 10 jedes Bügels 2,3 gehalten, die einen Abschnitt aufweisen, der ungefähr in Richtung der Zugkraft verläuft und in dem eine Öffnung zur Halterung der Ampulle 1 vorgesehen ist. Der andere Schenkel 11 jedes Bügels 2,3 ist ungefähr in der Achse der Ampulle 1 abgewinkelt. Dieser andere Schenkel 11 stützt den die Glasampulle haltenden Schenkel 10 der anderen Klammer.

Um die beiden Bügel für die angestrebte Funktion und Aufnahme der Zugkraft sicher miteinander zu verbinden, sind an den Enden der Schenkel 10 Haken 6 vorgesehen, die in Öffnungen 5 der zugeordneten Schenkel 11 des anderen Bügels eingreifen. Diese Hakenöffnungsverbindung nimmt in der Verriegelungsstellung oben und unten je die Hälfte der Zugkräfte auf. Die Enden der Schenkel 11 weisen eine keilförmig in Richtung auf das Ende zulaufende Lasche 7 auf. Diese Lasche 7 liegt in der Verriegelungsstellung in einem entsprechend keilförmig geformten Fenster 8 des angrenzenden Schenkels 10, der die Glasampulle hält.

Die Schenkel der Bügel stehen unter geringer Vorspannung in Richtung auf die Glasampulle 1. Die Federkraft für diese Vorspannung wird durch die ringförmige Öse 4 zur Verfügung gestellt, die gleichzeitig eine Feder ist.

Die Vorsprünge 12 sind mittig aus beiden Schenkeln der Bügel herausgeschnitten und schließen somit fast die Öse. Durch das fast vollständige Schließen der Öse wird verhindert, daß sich das Seil in Richtung Auslöseelement bewegen kann, wenn kein Zug auf dem Auslöseelement vorhanden ist.

Es ist leicht erkennbar, daß in der Verriegelungsstellung jeder Haken 6 jedes die Glasampulle 1 haltenden Schenkels 10 in der zugeordneten Öffnung 5 des anderen Schenkels 11 des anderen Bügels 2,3 liegt, und daß entsprechend die keilförmige Lasche 7 der nicht die Glasampulle haltenden Schenkel 11 in dem entsprechenden Fenster 8 des zugeordneten, die Glasampulle haltenden Schenkels 10 liegen. Die Glasampulle wird druckbeansprucht, und zwar im wesentlichen durch ca. 30% der Gesamtkraft. Die Kräfte der Vorspannung sind vernachlässigbar klein.

Wenn jetzt der Sicherheitsfall eintritt, d.h. die Glasampulle 1 aufgrund der Wärmeeinwirkung zerstört wird, will das Kräfteparallelogramm zusammenklappen. Es wird jedoch daran noch gehindert, da der Schenkel 11, der nicht das Auslöseelement aufnimmt, noch über die Mittelachse des Auslöseelementes hinaus verläuft, und mit seinem Ende, dort wo der Schenkel 11 sich zur Lasche 7 verjüngt, auf dem anderen Schenkel 10 aufliegt und diesen entgegen der Richtung des Hakens 5 dreht und somit die Verriegelung zwangsweise öffnet. Da beide Kräfte sich proportional verhalten, entriegelt das Auslöseelement zuverlässig auch bei hohen Zugkräften. Da die Bügel 2,3 gering vorgespannt sind, öffnet die Trennvorrichtung auch ohne Zugkraft.

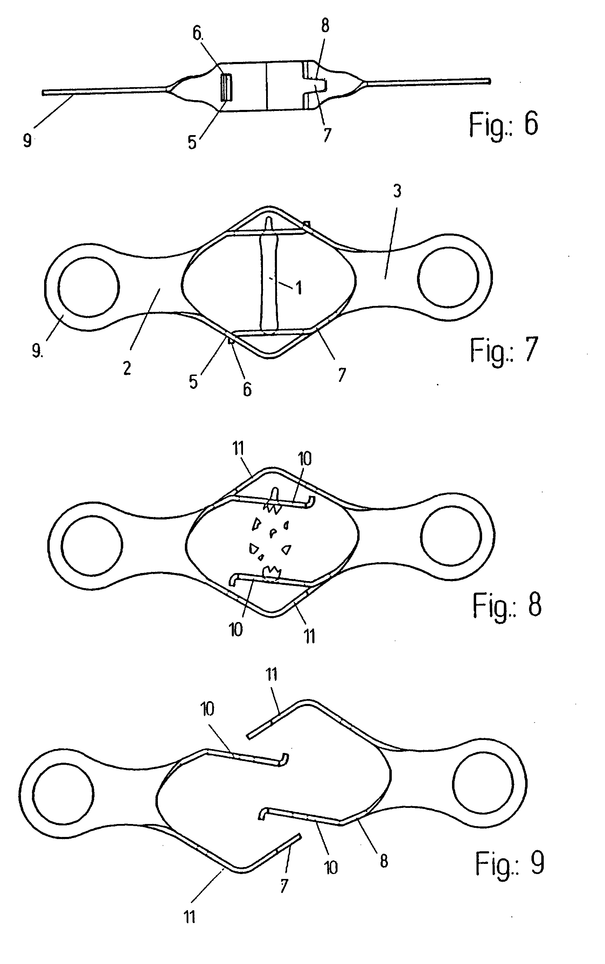

Die Ausführungsform nach den Fig. 6 und 7 ist grundsätzlich so aufgebaut wie diejenige nach den Fig. 2 bis 5.

Lediglich die Öse 9 ist anders geformt. Diese Öse 9 ist dadurch entstanden, daß der Blechzuschnitt, aus dem die Klammern bestehen, um die Zugachse um 90° gedreht wurde, so daß entsprechend flache Ösen 9 entstehen, die sich gut mit Bolzen oder Schrauben verbinden lassen. Dieses wird beim Betrachten der Fig. 6 bis 9 ohne weiteres deutlich. Die Federkraft, die die Vorspannung auf die Glasampulle 1 ausübt, wohnt den Schenkeln inne. Die Vorspannung wirkt, ebenso wie bei der Ausführungsform nach den Fig. 2 bis 5, derart, daß im Sicherheitsfall bei Zerstörung der Glasampulle 1 die Haken 6 sicher aus den Öffnungen 5 herausgedrückt werden und die in Fig. 8 gezeigte Stellung einnehmen.

Bei beiden Ausführungsformen sind die Bügel vorteilhafterweise identisch. Sie sind lediglich um 180° um die Zugachse gedreht symmetrisch zueinander angeordnet. Hierdurch wird eine kostengünstige Herstellung erreicht. Diese erfolgt aus einem Blechzuschnitt, der nach der Umformung gehärtet wird.

Anstelle der Glasampulle 1 sind auch andere thermische Auslöseelemente - beispielsweise Schmelzlotelemente - einsetzbar.

Jeder Bügel muß nicht aus einem Stück bestehen. Er kann auch zusammengesetzt sein, so lange die Kräfte entsprechend übertragen werden.

## Patentansprüche

1. Thermisch auslösende Trennvorrichtung, insbesondere für Feuerschutzanlagen, mit zwei einander gegenüberliegend angeordneten und miteinander verbundenen, auf Zug beanspruchten Fügeteilen, zwischen denen das thermische Auslöseelement gehalten ist, wobei die Fügeteile als die Zugkraft (Z) teilende Bügel (2,3) mit je zwei Schenkeln (10,11) ausgebildet sind, wobei das zerstörbare thermische Auslöseelement zwischen je einem der einander gegenüberliegenden Schenkel (10) der Bügel (2,3) im wesentlichen senkrecht zur Zugrichtung in der Verriegelungsstellung gehalten ist, und wobei je einer der das thermische Auslöseelement (1) haltenden Schenkel (10) des einen Bügels (2 oder 3) bei Anwesenheit des thermischen Auslöseelementes in der Verriegelungsstellung mit dem anderen Schenkel (10) des anderen Bügels (2 oder 3) formschlüssig gegen die Zugrichtung verbunden ist.

2. Vorrichtung nach Anspruch 1, **dadurch gekennzeichnet, daß** sich die beiden Schenkel (10,11) über die Mittelachse des thermischen Auslöseelementes (1) hinaus erstrecken.

3. Vorrichtung nach Anspruch 1 oder 2, **dadurch gekennzeichnet, daß** die Schenkel (10,11) jedes Bügels (2,3) in Richtung auf die Achse des thermischen Auslöseelementes federnd vorgespannt sind.

4. Vorrichtung nach einem oder mehreren der vorliegenden Ansprüche, **dadurch gekennzeichnet, daß** die beiden Bügel (2,3), vorzugsweise aus gehärtetem Flachbandstahl, identisch ausgebildet und um die Zugachse um 180° gedreht zueinander symmetrisch angeordnet und miteinander verbunden sind.

5. Vorrichtung nach einem oder mehreren der vorstehenden Ansprüche, **dadurch gekennzeichnet, daß** jeder andere, nicht das thermische Auslöseelement (1) haltende Schenkel (11) abgewinkelt ist und in der Verriegelungsstelung auf der dem thermischen Auslöseelement abgewandten Seite des das thermische Auslöseelement haltenden Schenkels (10) des anderen Bügels (2 oder 3) liegt.

6. Vorrichtung nach einem oder mehreren der vorstehenden Ansprüche, **dadurch gekennzeichnet, daß** am Ende jedes Schenkels (10) jedes Bügels (2 oder 3), der das thermische Auslöseelement (1) hält, ein Haken (6) ausgebildet ist, der in Verriegelungsstellung in eine Öffnung (5) in dem anderen, nicht das thermische Auslöseelement haltenden Schenkel (11) des anderen Bügels (2 oder 3) eingreift.

7. Vorrichtung nach einem oder mehreren der vorstehenden Ansprüche, **dadurch gekennzeichnet, daß** am Ende des Schenkels (11) jedes Bügels (2,3), der nicht das thermische Auslöseelement (1) hält, ein keilförmig in Richtung auf das Ende zulaufende Lasche (7) ausgebildet ist, die in der Verriegelungsstellung in einem entsprechend keilförmig geformten Fenster (8) in dem angrenzenden, das thermische Auslöseelement haltenden Schenkel (11) des anderen Bügels (2,3) steckt.

8. Vorrichtung nach einem oder mehreren der vorstehenden Ansprüche 1 bis 7, **dadurch gekennzeichnet, daß** jeder Bügel (2,3) eine die Zugkraft übertragende Öse (4) aufweist, die als ringförmige Feder ausgebildet ist.

9. Vorrichtung nach einem oder mehreren der vorstehenden Ansprüche 1 bis 7, **dadurch gekennzeichnet, daß** jeder Bügel (2,3) eine die Zugkraft übertragende Öse (9) aufweist, die durch Verdrehen des Fügeteils oder Flachstahls um 90° um die Zugachse flach ausgebildet ist.

10. Vorrichtung nach einem oder mehreren der vorstehenden Ansprüche, **dadurch gekennzeichnet, daß** das thermische Auslöseelement eine Glasampulle (1) ist.

## Claims

1. Thermal release separating device, particularly for fire protection systems, with two facing, interconnected, tensioned joint members between which is held the thermal release element, in which the joint members are constructed as fastenings (2, 3), which divide the tensile force (Z) and which have in each case two legs (10, 11), in which the destructable thermal release element is held between in each case one of the facing legs (10) of the fastenings (2, 3) substantially perpendicular to the tension direction in the locking position and in which in each case one of the legs (10) of one fastening (2 or 3) holding the thermal release element (1) in the case of the presence of the thermal release element in the locking position is connected positively counter to the tensile direction to the other leg (10) of the other fastening (2 or 3).

2. Device according to claim 1, **characterized in that** the two legs (10, 11) extend over and beyond the centre axis of the thermal release element (1).

3. Device according to claim 1 or 2, **characterized in that** the legs (10, 11) of each fastening (2, 3) are resiliently pretensioned in the direction of the axis of the thermal release element.

4. Device according to one or more of the preceding claims, **characterized in that** the two fastenings (2, 3) are preferably identically constructed from hardened flat strip steel and are positioned symmetrically to one another and interconnected turned about the tension axis by 180°.

5. Device according to one or more of the preceding claims, **characterized in that** every other leg (11) not holding the thermal release element (1) is angled and is located in the locking position on the side of the leg (10) of the other fastening (2 or 3) holding the thermal release element and remote from the latter.

6. Device according to one or more of the preceding claims, **characterized in that** at the end of each leg (10) of each fastening (2 or 3) holding the thermal release element (1) is formed a hook (6), which engages in the locking position in an opening (5) in the other leg (11) of the other fastening (2 or 3) not holding the thermal release element.

7. Device according to one or more of the preceding claims, **characterized in that** at the end of the leg (11) of each fastening (2, 3) not holding the thermal release element (1) is formed a tongue (7) tapering in wedge-like manner in the direction of the end and which engages in the locking position in a corresponding wedge-shaped window (8) in the adjacent leg (11) of the other fastening (2, 3) holding the thermal release element.

8. Device according to one or more of the preceding claims 1 to 7, **characterized in that** each fastening (2, 3) has a tensile force-transferring ring (4), which is constructed as an annular spring.

9. Device according to one or more of the preceding claims 1 to 7, **characterized in that** each fastening (2, 3) has a tensile force-transferring ring (9), which has a flat construction through turning the joint member or flat steel by 90° about the tension axis.

10. Device according to one or more of the preceding claims, **characterized in that** the thermal release element is a glass ampoule (1).

## Revendications

1. Dispositif de séparation à déclenchement thermique, en particulier pour installations de protection contre les incendies, avec deux pièces d'assemblage soumises à la traction agencées en face l'une de l'autre et reliées ensemble entre lesquelles l'élément déclencheur thermique est maintenu, où les pièces d'assemblage sont conçues comme des poignées (2, 3) divisant la force de traction (Z) avec chacune deux branches (10, 11), où l'élément déclencheur thermique destructible est maintenu entre chacune des branches opposées (10) des poignées (2, 3) sensiblement perpendiculairement à la direction de traction en position de verrouillage, et où chacune des branches (10) d'une des poignées (2 ou 3) maintenant l'élément déclencheur thermique (1) est reliée avec l'autre branche (10) de l'autre poignée (2 ou 3) de façon mécanique à l'encontre de la direction de traction en présence de l'élément déclencheur thermique en position de verrouillage.

2. Dispositif selon la revendication 1, **caractérisé en ce que** les deux branches (10, 11) se prolongent au-delà de l'axe médian de l'élément déclencheur thermique (1).

3. Dispositif selon la revendication 1 ou 2, **caractérisé en ce que** les branches (10, 11) de chaque poignée (2, 3) sont précontraintes en faisant ressort dans la direction de l'axe de l'élément déclencheur thermique.

4. Dispositif selon l'une ou plusieurs des revendications précédentes, **caractérisé en ce que** les deux poignées (2, 3) sont formées de manière identique, de préférence en acier feuillard plat durci, et agencées de manière symétrique l'une par rapport à l'autre par rotation de 180° autour de l'axe de traction et reliées ensemble.

5. Dispositif selon l'une ou plusieurs des revendications précédentes, **caractérisé en ce que** chaque autre branche ne maintenant pas l'élément déclencheur thermique (1) est coudée et se situe en position de verrouillage sur le côté de la branche (10) maintenant l'élément déclencheur thermique de l'autre poignée (2 ou 3) opposé à l'élément déclencheur thermique.

6. Dispositif selon l'une ou plusieurs des revendications précédentes, **caractérisé en ce qu'**à l'extrémité de chaque branche (10) de chaque poignée (2 ou 3) qui maintient l'élément déclencheur thermique (1) est formé un crochet (6) qui s'insère en position de verrouillage dans une ouverture (5) de l'autre branche (11) ne maintenant pas l'élément déclencheur thermique de l'autre poignée (2 ou 3).

7. Dispositif selon l'une ou plusieurs des revendications précédentes, **caractérisé en ce qu'**à l'extrémité de la branche (11) de chaque poignée (2, 3) qui ne maintient pas l'élément déclencheur thermique (1) est formée une languette (7) cunéiforme entrant dans la direction de l'extrémité, qui s'introduit en position de verrouillage dans une fenêtre (8) correspondante façonnée de manière cunéiforme dans la branche adjacente maintenant l'élément déclencheur thermique (11) de l'autre poignée (2, 3).

8. Dispositif selon l'une ou plusieurs des revendications précédentes 1 à 7, **caractérisé en ce que** chaque poignée (2, 3) comprend un anneau (4) transmettant la force de traction, qui est conçu comme un ressort circulaire.

9. Dispositif selon l'une ou plusieurs des revendications précédentes 1 à 7, **caractérisé en ce que** chaque poignée (2, 3) comprend un anneau (9) transmettant la force de traction, qui est conçu plat par la torsion de la pièce d'assemblage ou de l'acier plat à 90° autour de l'axe de traction.

10. Dispositif selon l'une ou plusieurs des revendications précédentes, **caractérisé en ce que** l'élément déclencheur thermique est une ampoule en verre (1).
